# NEW EUROPEAN PATENT SPECIFICATION

(11) **EP 0 901 507 B2**
(45) Date of publication and mention of the opposition decision: **23.02.2005**
(45) Mention of the grant of the patent: 18.07.2001
(21) Application number: 97926779.6
(22) Date of filing: 16.05.1997
(51) Int. Cl.: C08L 77/10, C08K 3/00

(54) **AROMATIC POLYAMIDE RESIN COMPOSITION HAVING EXCELLENT BALANCE OF TOUGHNESS AND STIFFNESS**
AROMATISCHE POLYAMIDHARZZUSAMMESETZUNG MIT AUSGEZEICHNETEM GLEICHGEWICHT ZWISCHEN ZÄHIGHEIT UND STEIFIGKEIT
COMPOSITION DE RESINE POLYAMIDE AROMATIQUE OFFRANT UN EXCELLENT EQUILIBRE ENTRE DURETE ET RIGIDITE

(30) Priority: 24.05.1996 JP 13034296
(43) Date of publication of application: 17.03.1999
(73) Proprietor: E.I. DU PONT DE NEMOURS AND COMPANY, Wilmington, Delaware 19898 (US)
(72) Inventor: NOZAKI, Masahiro, Utsunomiya-shi, Tochigi-ken 321 (JP)
(74) Representative: Abitz, Walter, Dr.-Ing.
(86) International application number: PCT/US1997/009090
(87) International publication number: WO 1997/044395

(56) References cited:
- EP-A- 0 368 281
- EP-A- 0 561 631
- WO-A-95/20630
- JP-A- 4 053 870
- US-A- 5 292 805
- US-A- 5 436 294

## Description

### BACKGROUND OF THE INVENTION

The present invention relates to aromatic polyamide resin compositions which are widely used in covers, gears, structural materials, automotive parts requiring hydrolysis resistance and other automotive parts, covers, gears and other electronic parts, sinks and other furniture parts for industrial or domestic use, and table tops, desk tops, kitchen tops and other plate-shaped applications that require dimensional accuracy, heat resistance, chemical resistance, toughness and stiffness.

The technology to improve the stiffness of molded products by blending glass fibers, talc and other inorganic fillers in a polyamide resin has been widely known.

Furthermore, for the molded articles obtained by molding a polyamide resin composition blended with glass fibers, especially large molded articles, warping occurs because of shrinkage anisotropy. In order to solve the problem of warping, an inorganic filler with a small aspect ratio has been used. However, in this case, a problem occurs in which the impact resistance of the molded articles is markedly decreased.

On the other hand, many technologies related to the improvement of the impact resistance by the addition of a variety of additives into an aliphatic polyamide resin have been known. Specifically, there is a polyamide resin composition (Japanese Kokoku Patent No. Sho 42[1967]-12546) consisting of a blend of 50-99 wt% of a polyamide resin and 50-1 wt% of an olefin copolymer which contains 0.1-10 mol% of acid groups. Furthermore, there is a polyamide resin composition (Japanese Kokoku Patent No. Sho 55[1980]-44108) consisting of 60-99 wt% of an aliphatic polyamide resin and 1-40 wt% of a mixture, containing at least one polymer which is a certain type branched-chain or straight-chain polymer with a tensile modulus in the range of about 1.0-20,000 psi, having particle size in the range of 0.01-1.0 micron, and having positions adhered to the polyamide resin, with the ratio of the tensile modulus of the polyamide matrix resin to the tensile modulus of at least one of the polymers being larger than 10:1, at least one of the polymers in the blend being 20 wt%, and the remainder being other blendable polymers as a diluent.

US-A-5 292 805 and US-A-5 436 294 disclose a blend of aromatic polymer resin having relatively high melting points, generally about 290°C or higher, filler and polypropylene together with carboxyl-modified polypropylene to compatibilize the polypropylene and polyamide for improvement of processability.

EP-A-0 561 631 discloses an aromatic polyamide composition of an aromatic polyamide having a high melting point of not lower than 280°C, a modified polymer amounting to 2 to 100 parts per 100 parts by weight of the polyamide, a hindered phenol type antioxidant and a sulfur type antioxidant; the composition optionally contains glass fibers in an amount of not more than 200 parts by weight based on 100 parts by weight of the resin components.

EP-A-0 368 281 discloses an aromatic polyamide composition comprising an olefin copolymer in an amount of 0.5 to 50 parts by weight, preferably 1.0 to 40 parts by weight, most preferably 5 to 35 parts by weight, in relation to 100 parts by weight of the aromatic polyamide resins, further optionally inorganic or organic filler in an amount of not more than 200 parts by weight, preferably not more than 100 parts by weight, most preferably 0.5 to 50 parts by weight, in relation to 100 parts by weight of the aromatic resins.

Moreover, the blending properly of an inorganic filler and an impact modifier into an aliphatic polyamide resin is also a commonly used technology among skilled persons in the field.

However, attempts to blend an inorganic filler and an impact modifier into an aromatic polyamide resin have not been conducted conventionally. Attempts to provide a resin composition with an excellent balance in stiffness and toughness by blending these additives, without causing deterioration of the excellent heat resistance and chemical resistance of the aromatic polyamide, has not been as easy as blending these additives into the aliphatic polyamides.

Here, the present invention has an objective of providing an aromatic polyamide resin composition with an excellent balance in toughness and stiffness, without the warping problem of molded products, while maintaining the excellent heat resistance and chemical resistance of the aromatic polyamide resin, especially by specifying the blending ratio of the inorganic filler and the impact modifier, in order to solve the above-mentioned problems.

### SUMMARY OF THE INVENTION

This invention provides aromatic polyamide resin compositions comprising an aromatic polyamide resin having a melting point of at least 290°C; an inorganic filler with the exception of glass fibers, and an elastomeric impact modifier, wherein the ratio of the weight (M) of said inorganic filler to the weight (T) of said elastomeric impact modifier is 2.0 ≦ M/T ≦ 6.5.

It is preferred that the melt viscosity of the composition, measured with a capillary rheometer at a shear rate of 1000/second and at a process temperature 20-30°C, higher than the melting point of the aromatic polyamide resin, is 350 Pa·sec or less. It is further preferred that the resin in said composition has a glass transition temperature of at least 60°C.

Compositions with aromatic polyamides, elastomeric impact modifiers and glass fibers with an M/T ratio 2.0 ≤ M/T ≤ 6.5 are disclosed in JP 4-53870, however, only in conjunction with automotive understood parts and not for avoiding warpage.

### DETAILED DESCRIPTION

As used herein the term "polyamide resin composition" means polyamide resins mixed with other materials. "Polyamide resin" means the polymer alone. "Impact modifier" means a material which, when incorporated with resin into the composition, improves impact performance of compositions lacking the impact modifier.

In order to solve the above-mentioned problems, the polyamide resin composition of the present invention is obtained by blending an aromatic polyamide resin having a melting point of at least 290°C, an inorganic filler, and an elastomeric modifier.

As the monomers constituting the aromatic polyamide resins used in the aromatic polyamide resin compositions of the present invention, aromatic diamines, such as p-phenylenediamine, o-phenylenediamine, m-phenylenediamine, p-xylenediamine, m-xylenediamine, etc., aromatic dicarboxylic acids, such as terephthalic acid, isophthalic acid, phthalic acid, 2-methylterephathalic acid, naphthalenedicarboxylic acid, etc., and aromatic aminocarboxylic acids such as p-aminobenzoic acid, etc., can be mentioned. These aromatic monomers can be used alone or in combination of two or more.

Furthermore, as long as the melting point of the obtained aromatic polyamide is at least 290°C, monomers other than aromatic monomers may be used in combination in the above-mentioned aromatic monomers. As the monomers other than the above-mentioned aromatic monomers, aliphatic dicarboxylic acids, aliphatic alkylenediamines, alicyclic alkylenediamines, and aliphatic aminocarboxylic acids can be contained. As the aliphatic dicarboxylic acids, adipic acid, sebacic acid, azelaic acid, dodecane diacid, etc. can be used. These can be used alone or in combination of two or more. Furthermore, the aliphatic alkylenediamine and dicarboxylic acid components may be in a straight-chain shape or a branched-chain shape. These may be used alone or in combination of two or more. Specific examples of these aliphatic alkylenediamines, are ethylenediamine, trimethylenediamine, tetramethylenediamine, pentamethylenediamine, hexamethylenediamine, 1,7-diaminoheptane, 1,8-diaminooctane, 1,9-diaminononane, 1,10-diaminodecane, 2-methylpentamethylenediamine, 2-ethyltetramethylenediamine, etc. Specific examples of the alicyclic alkylenediamine components are 1,3-diaminocyclohexane, 1,4-diaminocyclohexane, 1,3-bis(aminomethyl) cyclohexane, bis (aminomethyl)cyclohexane, bis(4-aminocyclohexyl) methane, 4,4'-diamino-3,3'-dimethyldicyclohexylmethane, isophoronediamine, piperazine, etc. These can be used alone or in combination of two or more. Specific examples of aminocarboxylic acid components are ε-aminocaproic acid, omega-aminoundecanoic acid, etc.

The preferred aromatic polyamide resins that can be used in the aromatic polyamide resin compositions of the present invention are, a polyamide with terephthalic acid preferably used as an aromatic dicarboxylic acid, a polyamide resin consisting of terephthalic acid, hexamethylenediamine and 2-methylpentamethylenediamine, a polyamide resin consisting of terephthalic acid, adipic acid, and hexamethylenediamine, a polyamide resin consisting of terephthalic acid, isophthalic acid and hexamethylenediamine, and a polyamide resin consisting of terephthalic acid, isophthalic acid, adipic acid and hexamethylenediamine. The contents of the various monomer components can be appropriately decided so that the melting point of the aromatic polyamide resin is at least 290°C. For an aromatic polyamide with a melting point lower than 290°C, there is a problem in heat resistance. Furthermore, an aromatic polyamide with a glass transition temperature of at least 60°C is preferred so that the chemical resistance will not deteriorate. In the manufacture of an aromatic polyamide with a high glass transition temperature, it is necessary to increase the content of the aromatic monomer components in the aromatic polyamide resin. For example, an aromatic polyamide resin consisting of terephthalic acid as the carboxylic acid component, and 2-methylpentamethylenediamine and hexamethylenediamine as a diamine component and terephthalic acid has a higher glass transition temperature than an aromatic polyamide resin consisting of terephthalic acid and adipic acid as the carboxylic acid components and hexamethylenediamine as the diamine component. Thus, in applications in which chemical resistance is especially desired, an aromatic polyamide resin consisting of terephthalic acid as the carboxylic acid component and 2-methylpentamethylenediamine and hexamethylenedimine as the diamine component can be used preferably.

Moreover, the aromatic polyamide resin of the present invention includes a blend obtained by bending two or more aromatic polyamide resins obtained from the various above-mentioned monomer components, and a blend of an aromatic polyamide resin and an aliphatic polyamide resin. However, the melting point of the blend must be at least 290°C.

The inorganic fillers of the present invention are those customarily used in the reinforcement of engineering plastics. Specifically glass flakes, kaolin, clay, talc, wollastonite, calcium carbonate, silica, carbon fibers, potassium titanate, etc. are available. Kaolin and clay are preferred.

As impact modifiers, elastomers are used. For example, an elastomer consisting of ethylene-α-olefin, an elastomer consisting of ethylene-propylene-diene, an elastomer consisting of ethylene-unsaturated carboxylic acid, an elastomer consisting of ethylene-unsaturated carboxylic acid ester, an elastomer consisting of ethylene-unsaturated carboxylic acid-unsaturated carboxylic acid ester, an elastomer consisting of α-olefin-unsaturated carboxylic acid, an elastomer consisting of α-olefin-unsaturated carboxylic acid ester, an elastomer consisting of α-olefin-unsaturated carboxylic acid-unsaturated carboxylic acid ester, an elastomer consisting of ethylene-α-olefin-unsaturated carboxylic acid-unsaturated carboxylic acid ester; and graft modified materials of the above-mentioned elastomers. Two or more of unmodified elastomers or modified elastomers may also be blended. At least one of the above-mentioned unmodified elastomers and at least one of the above-mentioned modified elastomers may also be blended. Preferably, an elastomer consisting essentially of ethylene-propylene-diene modified with carboxylic acid-carboxylic acid anhydride can be used. The elastomer consisting essentially of ethylene-propylene-dienes modified with carboxylic acid-carboxylic acid anhydride, may be, for example, a mixture of ethylene/propylene/1,4-hexadiene-g-maleic anhydride/ethylene/propylene/1,4-hexadiene and ethylene/maleic anhydride; a mixture of ethylene/propylene/1,4-hexadiene and ethylene/propylene/1,4-hexadiene-g-maleic anhydride; ethylene/propylene/1,4-hexadiene/norbomadiene-g-maleic anhydride fumaric acid; ethylene/1,4-hexadiene/norbomadiene-g-maleic anhydride monoethyl ester; ethylene/propylene/1,4-hexadiene/norbomadiene-g-fumaric acid; a mixture of ethylene/propylene/1,4-hexadiene and ethylene/monoethylester of maleic anhydride; a mixture of ethylene/propylene/1,4-hexadiene and ethylene/maleic acid monobutyl ester; a mixture of ethylene/propylene/1,4-hexadiene and ethylene/maleic anhydride, etc.

Furthermore, ionomers of polyolefin copolymers, and styrene-type elastomers can also be appropriately used as impact modifiers. The preferred ionomers of polyolefin copolymers are the ionomers consisting of an ethylene unit, a derivative unit of an α,β-ethylenic unsaturated carboxylic acid, and an ester unit. Even more preferably, the derivative units of the α,β-ethylenic unsaturated carboxylic acids are one or more derivatives of α,β-ethylenic unsaturated carboxylic acids selected from a group consisting of a monocarboxylic acid having a carboxylic acid group ionized by the neutralization of metal ions and a dicarboxylic acid having carboxylic acid groups ionized by the neutralization of metal ions and having ester groups, as α,β-ethylenic unsaturated carboxylic acids with 3-8 carbon atoms. As the ester units, ionomers as C₄₋₂₂ acrylic esters or methacrylic esters can be used. As the styrene-type elastomers, block copolymers constituted by monomers such as styrene-isobutylene/styrene-hydrogenated polyolefin, etc. can be used. The above-mentioned elastomeric impact modifiers can be used alone or as mixtures of two or more.

It is necessary to blend the above-mentioned inorganic fillers and the above-mentioned elastomeric impact modifiers so that the ratio of the weight M of the inorganic filler to the weight T of the elastomeric impact modifier is 2.0 ≦ M/T ≦ 6.5, more preferably 2.5 ≦ M/T ≦ 6.0. If M/T is less than 2.0, it will be too soft and a ejectability defect of the molded article will occur. If ejection is conducted unreasonably, deformation will occur. Moreover, heat resistance will deteriorate. If it exceeds 6.5, impact resistance will be insufficient and molding will be difficult as well. By deciding the blending amounts of the inorganic fillers and the impact modifier within the range of M/T specified in the present invention, no warping problem will occur. An aromatic polyamide resin composition with an excellent balance in toughness and stiffness without damaging the original excellent heat resistance of the aromatic polyamide resin can be provided.

If the composition of the present invention is used to mold kitchen sinks or other large-scale molded articles, it is preferable to adjust the aromatic melt viscosity to 350 Pa·sec or less, measured with a capillary rheometer at a shear rate of 1000/sec and the process temperature. In the case of large-scale molded articles, since the time from the melting of the resin composition to injection molding is long, short shot and other problems will occur if the melt viscosity is not adjusted to 350 Pa·sec or less. Here, the process temperature is 20-30°C higher than the melting point of the aromatic polyamide resin used.

In order to inhibit the color change of the molded articles formed from the composition of the present invention and to improve heat resistance and aging characteristics, it is acceptable to further blend 0.01-2.0 wt% of metal salts of phosphoric acid, phosphorous acid or hypophosphorous acid in the above-mentioned components.

Furthermore, to an extent not deteriorating the characteristics of the aromatic polyamide composition of the present invention, in addition to the above-mentioned components, a thermal stabilizer, a plasticizer, an antioxidant, a nucleating agent, a dye, a pigment, a mold-releasing agent, and other additives may be blended.

The aromatic polyamide resin composition of the present invention can be manufactured by any well-known manufacturing methods. For examples, by using a twin-screw extruder, an aromatic polyamide resin, a filler, and an impact modifier may be simultaneously blended. An aromatic polyamide resin and a filler, and an aromatic polyamide resin and an impact modifier may be separately blended, and the blends are melted and extruded together with a twin-screw or single-screw extruder. Moreover, a pellet made from an aromatic polyamide resin and a filler manufactured by a twin-screw extruder and a pellet made from an aromatic polyamide resin and an impact modifier may also be mixed and supplied to a molding machine for the manufacture of a molded article. Furthermore, in a molding machine with the installation of an appropriate screw, an aromatic polyamide resin, a filler and an impact modifier are supplied directly for the manufacture of a molded article.

### EXAMPLES

The present invention will be explained by the following examples. However, the present invention is not restricted to these examples.

### Examples 1-8 and Comparative Examples 1-5

The various components shown in Table I were melted and kneaded in a twin-screw extruder (TEX-44, manufactured by Nippon Steel Co.). After water cooling, pellets were manufactured. The melt viscosities of the obtained pallets were measured with a capillary rheometer at a shear rate of 1000/sec and 330°C. Also the obtained pellets were molded into 13 mm x 130 mm x 3.2 mm test specimens at a mold temperature of 140°C. After holding the molded test specimens at 23°C and a relative humidity of 50% for 48 h, the shrinkage ratio F in the direction of the resin flow during molding and the shrinkage ratio V in the perpendicular direction with respect to the resin flow direction were measured. If the value of F/V is near 1, no warping will occur in the molded articles. Moreover, using the obtained test specimens, the following physical properties were measured according to the test methods in the following. The test results of the obtained examples are shown in Table I. The test results of comparative examples are shown in Table II.
Heat deflection temperature, JIS K7207 (4.6 kg/cm² load)
Flexural Modulus ASTM D 790
Unnotched Izod Impact strength ASTM D 266
Tensile strength ASTM D 638
Elongation ASTM D 638

By using the above-mentioned pellets, 75 mm x 125 mm x 3.2 mm test specimens were molded at a mold temperature of 160°C. After holding the molded test specimens at 23°C and a relative humidity of 50% for 48 h, up to 40 mm of the long-side direction of the test specimens were fixed with a jack. A steel ball with a diameter of 10 cm and a weight of 1 kg was allowed to fall. The height of the ball at which the test specimens ruptured was measured. This was the falling-ball impact strength. The measured results for the examples are shown in Table I. Measured results for the comparative examples are shown in Table II.

The various components of Table I and Table II are as follows:

### Polymer A:

An aromatic polyamide (manufactured by Du Pont Co., melting point 305°C, and glass transition temperature 125°C) consisting of terephthalic acid/hexamethylenediamine and terephthalic acid/2 methylpentamethylenediamine (terephthalate acid/hexamethylene diamine: terephthalic acid/2-methylpentamethylenediamine is 50:50)

### Polymer B:

An aromatic polyamide (manufactured by Mitsui Petrochemical Ind. Co, Ltd., Ariane® C 2000, melting point 310°C, glass transition temperature 80°C) consisting of terephthalic acid/hexamethylenediamine and adipic acid/hexamethylenediamine (terephthalic acid/hexamethylenediamine:adipic acid/hexamethylenediamine is 55:45)

### Inorganic Filler:

Clay (manufactured by Engelhard Co., Translink 555) Glass fibers (manufactured by Nippon Plate Glass Co., Ltd., 3-mm long chopped strands)

### Impact Modifiers:

Ionomer (manufactured by Du Pont Co., Surlyn® 9320).

EPDM rubber (Ethylene/propylene/diene monomer copoylmer, TRX-101, manufactured by Du Pont Co.)

Olefin rubber (a polyolefin type impact modifier manufactured by Mitsui Petrochemical Co., Ltd., Tafmer® 0620)

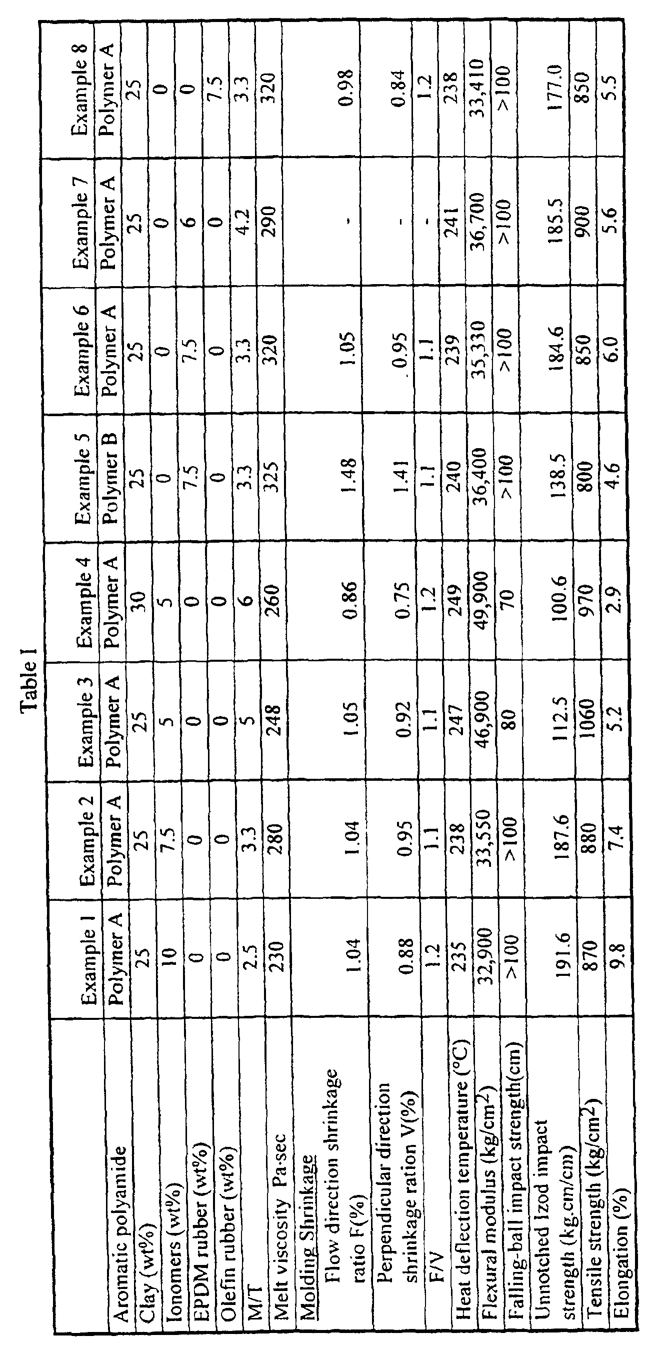

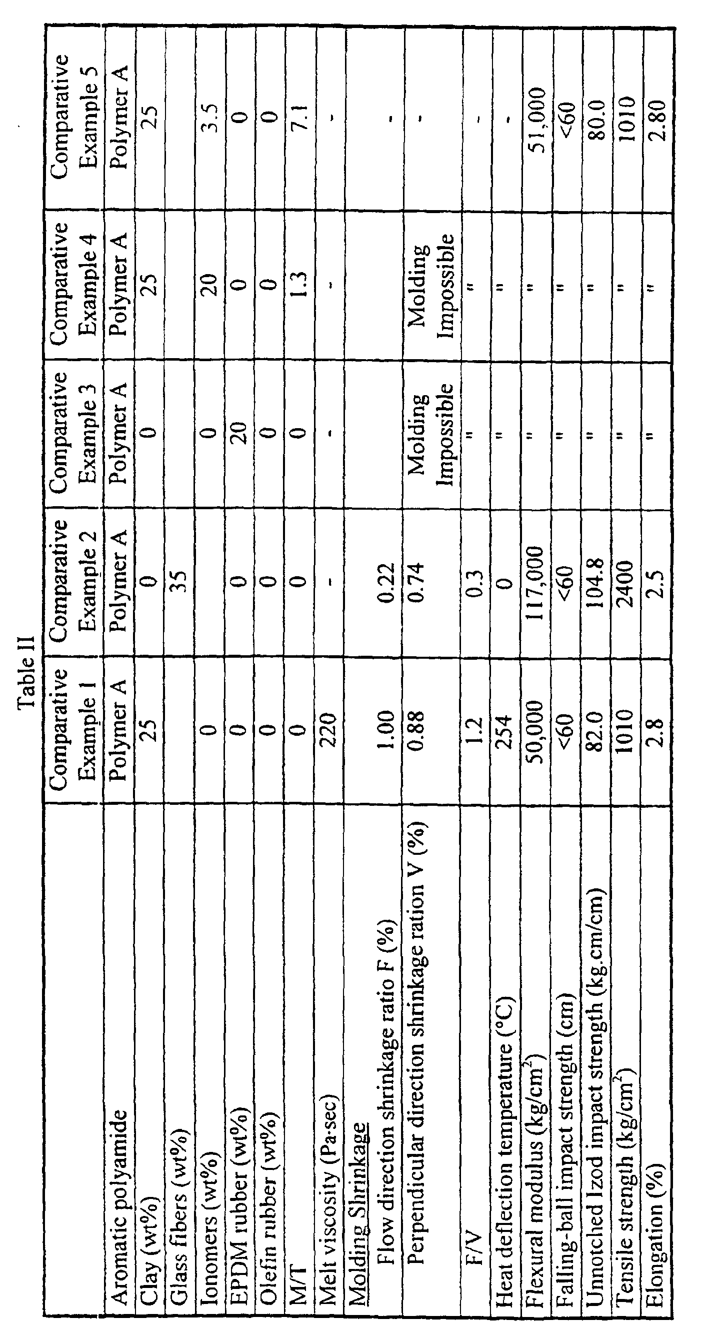

It is seen from Examples 1-8 that the composition of the examples have an excellent balance in stiffness as shown by the values of the deflection temperature under load and the flexural modulus, and in toughness shown by the values of the falling-ball impact strength and the unnotched Izod impact strength. The value of F/V showing the molding shrinkage was 1.1 or 1.2. It was found that no warping occurred in the molded articles. Furthermore, it was found that the mechanical characteristics shown by the tensile strength and the elongation did not deteriorate either. Moreover, Examples 1-8 and Comparative Examples 1 and 2 were compared. If only an inorganic filler was contained, the deflection temperature under load and the flexural modulus increased so that a molded article with excellent stiffness could be provided. In Comparative Examples 1 and 2, the falling-ball impact strength was as low as under 60 cm, the value of the unnotched Izod impact strength was also low. It was found that toughness deteriorated. Furthermore, if only an impact modifier was contained as in Comparative Example 3, it was found that molding was impossible. In Comparative Example 4, if the value of M/T was less than 2, the protrusion of the resin was difficult and moldability was poor. Comparative Example 5 shows that if the value of M/T exceeded 6, the values of the falling-ball impact strength and the unnotched Izod impact strength were low, and the toughness was insufficient.

### Examples 9-10, and Comparative Examples 6-7

The above-mentioned polymer A, EPDM rubber 7.5 wt%, clay 25 wt%, and sodium hypophosphite 0.2 wt% were melted and kneaded with a biaxial extruder (TEX-44, manufactured by Nippon Steel Mfg. Co.). After water cooling, pellets were manufactured. By using the obtained pellets, 13 mm x 130 mm x 3.2 mm test specimens were molded at a mold temperature of 140°C. After holding the molded test specimens at 23°C and a relative humidity of 50% for 48 h, the unnotched Izod impact strength was measured. This was regarded as the initial value. Next, the test specimens were placed in an oven at 90°C or 110°C. After the time shown in Table III had elapsed, the unnotched Izod impact strength was measured. The results are shown in Table III.

**Table III**

| | Example 9 | Comparative Example 6 | Example 10 | Comparative Example 7 |
|---|---|---|---|---|
| Temp.(°C) | 90 | 90 | 110 | 110 |
| | Unnotched Izod Impact Strength (kg cm/cm) | | | |
| During Molding | 187.3 | 184.6 | 187.3 | 184.6 |
| After 1 week | 207.3 | 129.2 | 204.0 | 9.0 |
| After 2 weeks | 245.2 | 32.8 | 211.8 | 9.1 |
| After 4 weeks | 230.0 | 13.1 | 148.7 | 9.5 |
| After 8 weeks | 177.4 | 7.1 | - | - |

The results shown in Table III show that, by blending sodium hypophosphite, heat resistance and aging characteristics were remarkably improved.

### Example 11, Comparative Example 8

The test specimens prepared in the same manner as in Example 9 were placed in an oven at 90°C. After the time shown in Table IV had elapsed, the color difference was measured. The color difference, by using the color difference formula (JIS Z 8730) of the Lab table color system, was calculated as the difference (ΔE) of the measured value during molding. The results are shown in Table IV.

**Table IV**

| | Example 11 | Comparative Example 8 |
|---|---|---|
| After 1 Week | 1.8 | 15.9 |
| After 2 Weeks | 2.6 | 27.2 |
| After 4 Weeks | 3.7 | 31.7 |
| After 8 Weeks | 5.9 | 54.5 |

From the values of ΔE shown in Table IV, it was found that the color change was inhibited by blending sodium hypophosphite.

As explained above, the aromatic polyamide resin composition of the present invention can provide a molded article with an excellent balance in toughness and stiffness without the formation of warping in the molded article while the high heat resistance, which the aromatic polyamide particularly has, can be maintained.

## Claims

1. An aromatic polyamide resin composition comprising an aromatic polyamide resin having a melting point of at least 290°C, an inorganic filler with the exception of glass fibers, and an elastomeric impact modifier, wherein the composition has a ratio of the weight M of said inorganic filler to the weight T of said elastomeric impact modifier of 2.0 ≦ M/T ≦ 6.5.

2. The composition of claim 1 wherein the elastomeric impact modifier is ethylene/propylene/diene monomer copolymer rubber.

## Patentansprüche

1. Aromatische Polyamidharzzusammensetzung, umfassend ein aromatisches Polyamidharz mit einem Schmelzpunkt von mindestens 290°C, einem anorganischen Füllstoff, mit der Ausnahme von Glasfasern, und einem elastomeren schlagzähmachenden Hilfsstoff, wobei die Zusammensetzung ein Verhältnis des Gewichts M des anorganischen Füllstoffs zu dem Gewicht T des elastomeren schlagzähmachenden Hilfsstoffs von 2,0 ≤ M/T ≤ 6,5 aufweist.

2. Zusammensetzung nach Anspruch 1, wobei der elastomere schlagzähmachende Hilfsstoff Ethylen/Propylen/Dien-Monomer-Copolymerkautschuk ist.

## Revendications

1. Composition de résine polyamide aromatique comprenant une résine polyamide aromatique possédant un point de fusion d'au moins 290°C, une charge inorganique, à l'exception des fibres de verre, et un modificateur de résistance aux chocs élastomère, dans laquelle la composition présente un rapport du poids M de ladite charge inorganique sur le poids T dudit modificateur de résistance aux chocs élastomère de 2,0 ≤M/T ≤6,5.

2. Composition suivant la revendication 1, dans laquelle le modificateur de résistance aux chocs élastomère est un caoutchouc à base de copolymère de monomères d'éthylène/propylène/diène.
